# EUROPEAN PATENT SPECIFICATION

(11) **EP 2 527 649 B1**
(45) Date of publication and mention of the grant of the patent: **18.12.2013**
(21) Application number: 11167447.9
(22) Date of filing: 25.05.2011
(51) Int. Cl.: F03D 11/00

(54) **Method to inspect components of a wind turbine**
Verfahren zur Prüfung von Komponenten einer Windturbine
Procédé permettant d'inspecter les composants d'une éolienne

(43) Date of publication of application: 28.11.2012
(73) Proprietor: Siemens Aktiengesellschaft, 80333 München (DE)
(72) Inventor: Stege, Jason, 7330 Brande (DK)

(56) References cited:
- EP-A1- 2 133 712
- DE-A1-102009 022 179
- DE-U1- 20 210 406

## Description

The invention relates to a method to inspect components of a wind turbine.

Wind turbines and their components like blades are inspected by service technicians regularly. They have to look for damages, which are caused by fatigue-loads for example. They even have to look for rust and oxidation damages, for damages due to environmental impacts like lightning strikes and hail or for damages caused by environmental conditions like ice, temperature-differences, etc.

Highly specialized technicians need for a quick check between two and six hours, thus this work is tedious and quite expensive.

Additionally the technician has to climb up to the component for the inspection. Thus there is a high accident-risk for the technician while he is working. Known methods for inspection are for example disclosed in DE 10 2009 022 179 A1.

It is the aim of the invention, to provide an improved method to inspect components of a wind turbine, especially usable to check blades of the wind turbine.

This aim is reached by the features of claim 1.

Preferred configurations of the invention are object of the dependent claims.

According to the method invented a so called "Unmanned Aerial Vehicle, UAV" is guided to the component, which needs to be inspected. A certain predefined distance between the UAV and the component is chosen in a way that high resolution images (like pictures or maps) of the component can be gathered by the UAV. The images are gathered by help of an image acquisition system, which is arranged asides the UAV. Thus the inspection is done remote controlled and is based on the images, being gathered by the UAV.

Preferably the UAV carries at least components of the image acquisition system or the whole image acquisition system.

The needed load capacity of the UAV can be reduced if only components of the image acquisition system are carried by the UAV. Thus costs can be reduced by reducing the size of the UAV being used.

Preferably an optical camera system or an ultrasonic system or a high-frequency system or an infrared camera system or a thermal camera system or another (remote-controlled) system, which is prepared to generate and gather images, is used as image acquisition system.

Some of those systems are well known from the consumer market and are thus quite cheap, small and they are even lightweight. Thus they can be moved and carried by an appropriate chosen UAV without problems.

Preferably the acquired images or resulting image-data are transferred and stored in a central database. This allows a subsequent inspection of the components after the inspection is done.

Preferably the transfer of the images or data is done wireless. All gathered images or image-data are transferred in real time towards used tools of the technician.

Weight is reduced asides the UAV as there is no longer the need for a database on board of the UAV. Gathered information are stored in real time and independent from the UAV being used.

Even the documentation of the components and of the inspection is done by use of the database quite easily and with a small amount of post-work needed.

Preferably the documentation is done as automated-self-documentation, preferably using an appropriate computer programme.

The method invented allows that only one technician or only one operator is required during the inspection-period. Thus the inspection-procedure is time efficient and cheap.

According to the method invented the technician stays on the ground of the wind turbine while the inspection-procedure is done. Thus the accident risk for the technician is quite low. There is no longer the need for the technician to climb up to the component of the wind turbine (like a blade) while the inspection is done.

Preferably the UAV takes off, navigates to the surface of the component like the blade and lands autonomously, being remote controlled by appropriate software.

Preferably the software uses GPS-data for the remote control of the UAV. Thus the operator is able to command and to return the UAV to any predetermined or previous position on its flight path. Thus the images can be improved stepwise if needed.

Preferably a computer is arranged asides the UAV. The computer is prepared to recognize damages asides the component automatically via the gathered images or image-data. Preferably the detected damages are highlighted within an image-stream or within a video, which is transferred to the technician on the ground.

Preferably the UAV records a high definition video of the entire flight. If a damage is detected the UAV flies preferably and automatically close to the component. Thus a close look is allowed while high resolution images of the damage are generated.

Preferably data of visual image(s) are transferred to a laptop used by the technician for the inspection. The technician determines if detected damages are serious or not. The damages are saved within a inspection-report automatically.

Preferably portions of the image-data are saved to a central database automatically and according to a set of predefined rules. These data can be used afterwards to track problems or surface features over time in relation to model type or environmental site conditions. This allows an improved scoping and prediction of potential problems at the components or at the whole wind turbine.

Preferably the UAV even provides additional data during the inspection is done. For example an infrared imaging or a thermal imaging can be done by arrangements which are positioned at least partially asides the UAV.

Even image overlays, computer vision, rangefinders and 3D scanner-capabilities may be used during the inspection is done.

For example when a wind turbine is operating there is a visible heat pattern within cracks in the blades of the wind turbine. This heat pattern is detected by an infrared-camera or by a thermal-camera.

The UAV, which is equipped with the infrared/thermal camera, takes high resolution images of the blade surface while the turbine is running or immediately after the wind turbine was stopped. Thus time is saved for the inspection as it is started immediately, while the wind turbine comes to a stopped-operation-mode stepwise.

Even the blade-root end or the whole balde-root-area can be scanned while the blades are turning, detecting possible cracks there.

The method invented is advantageous in view to time needed. The automated method for inspection as described above is four times faster than technicians can work while they are inspecting the components according to the prior art.

The method invented is advantageous in view to its efficiency. Relevant and problematic components like blades can be inspected regularly and with only a small amount of inspection-time needed.

The method invented is advantageous in view to the service-personal needed. Only a single technician is required.

The method invented is advantageous in view to the documentation. As described above the documentation is preferably done as "self documentation" thus all gathered pictures or images or videos, etc. are referenced and loaded into a database automatically and thus without contribution of the technician. All gathered information of the inspection-scans are available for post-defined searches.

The method invented is advantageous in view to the risks for the personal used. The technicians can remain on the ground instead of climbing or rappelling at the wind turbine.

The method invented is advantageous in view to the possibility of an augmented vision. The UAV allows an enhanced vision. Thus there is a high potential that even small damages can be detected by the technician.

The method invented is advantageous in view to the topic "forecast of potential damages" asides known components. The observation- or inspection-data are stored in a database regularly. Thus they can be used for the prediction of damages which might occur in the future.

The invention is shown in more detail by help of figures.

The figures show preferred configurations and do not limit the scope of the invention. They even do not limit the scope of the claims.
FIG 1 shows the principle idea of the method invented.
FIG 2 shows two possible UAV to be used.

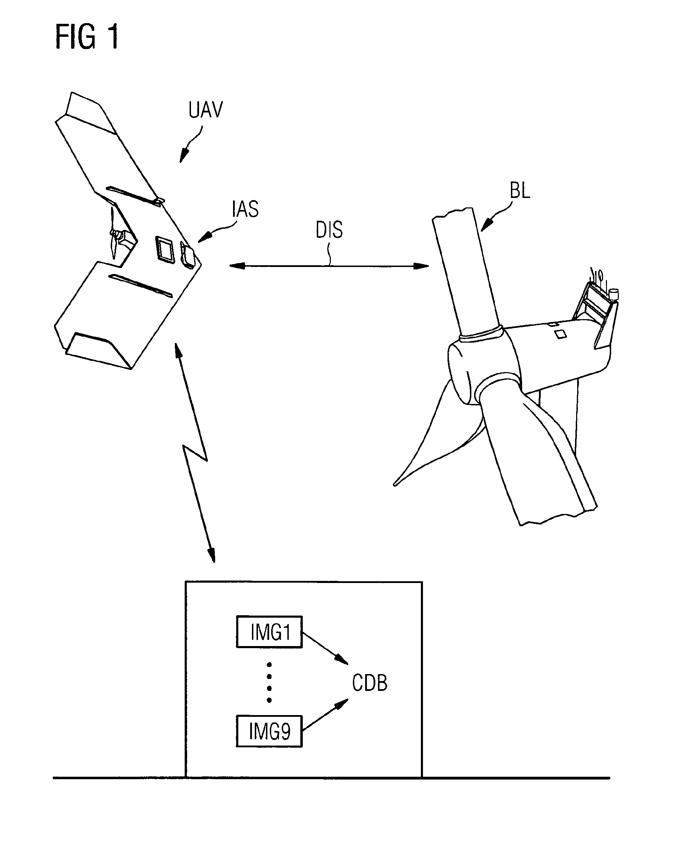

FIG 1 shows the principle idea of the method invented.

An Unmanned Aerial Vehicle UAV is guided towards a wind turbine component - in this case towards a blade BL.

A certain and predefined distance DIS between the unmanned aerial vehicle UAV and the blade BL is chosen in a way that high resolution images IMG1-IMG9 of the component are gathered by the unmanned aerial vehicle UAV. The images IMG1-IMG9 are gathered by an image acquisition system IAS. The inspection is done remote controlled and based on the images IMG1-IMG9, which are gathered by the UAV.

The images IMG1-IMG9 or resulting image-data IMG1-IMG9 are transferred and stored in a central database CDB, which is preferably arranged remote from the unmanned aerial vehicle UAV.

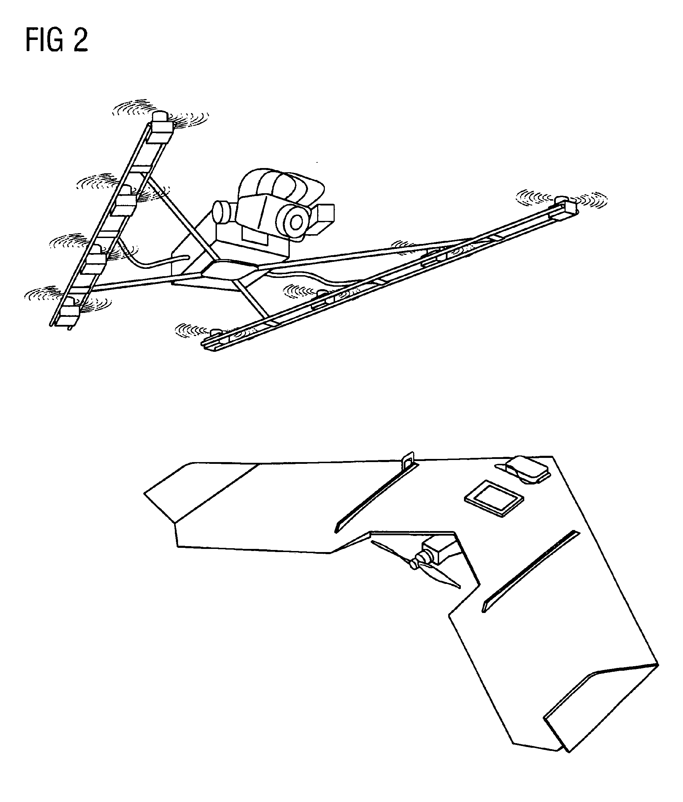

FIG 2 shows two possible UAV to be used. One is named "Falcon-PARS", a kind of helicopter which is offered by the company "ISTS Americas Corporation" for example. The other one is a plane, offered by the company SENSEFLY, Switzerland.

## Claims

1. Method to inspect a component (BL) of a wind turbine (WT),
- where an unmanned aerial vehicle (UAV) is guided to the component for the inspection,
- where a certain predefined distance between the unmanned aerial vehicle (UAV) and the component (BL) is chosen in a way that high resolution images (IMG1-IMG9) of the component are gathered by the unmanned aerial vehicle (UAV),
- where the images (IMG1-IMG9) are gathered by an image acquisition system (IAS),
- where the inspection is done remote controlled and based on the images (IMG1-IMG9), which are gathered by the UAV.

2. Method according to claim 1, where at least components of the image acquisition system (IAS) or where the whole image acquisition system (IAS) are carried by the unmanned aerial vehicle (UAV) for the inspection.

3. Method according to claim 1 or claim 2, where an optical camera system or an ultrasonic system or a high-frequency system or an infrared camera system or a thermal camera system or another system is used as image acquisition system (IAS) to generate and gather images.

4. Method according to one of the claims 1 to claim 3, where the images (IMG1-IMG9) or resulting image-data are transferred and stored in a central database (CDB), which is preferably arranged remote from the unmanned aerial vehicle (UAV).

5. Method according to claim 4, where the transfer of the images or the image-data is done wireless.

6. Method according to one of the claims 1 to claim 5,
- where the images (IMG1-IMG9) or resulting image-data are stored using an automated-self-documentation, or
- where portions of the image-data are saved to a central database automatically and according to a set of predefined rules for the tracking of surface-problems over time.

7. Method according to one of the claims 1 to claim 6, where the unmanned aerial vehicle (UAV) takes off, navigates to the surface of the component and lands autonomously, being remote controlled.

8. Method according to claim 7, where GPS-data are used for the remote control.

9. Method according to one of the claims 1 to claim 8, where a computer is used asides the unmanned aerial vehicle (UAV) to detect damages at the component automatically via the gathered images or via the resulting image-data.

10. Method according to claim 9, where detected damages are highlighted within an image-stream or within a video, which is transferred from the unmanned aerial vehicle (UAV).

11. Method according to one of the claims 1 to claim 10, where the unmanned aerial vehicle (UAV) is used to detect heat patterns of cracks in blades of the wind turbine by a infrared or thermal camera.

12. Method according to one of the claims 1 to claim 11, where the surface of the component is inspected.

## Patentansprüche

1. Verfahren zur Inspektion einer Komponente (BL) einer Windturbine (WT),
- wobei ein unbemanntes Luftfahrzeug (UAV) für die Inspektion zu der Komponente geleitet wird,
- wobei eine gewisse vorgegebene Entfernung zwischen dem unbemannten Luftfahrzeug (UAV) und der Komponente (BL) auf eine solche Weise gewählt wird, dass durch das unbemannte Luftfahrzeug (UAV) hochauflösende Bilder (IMG1-IMG9) der Komponente gesammelt werden,
- wobei die Bilder (IMG1-IMG9) durch ein Bilderfassungssystem (IAS) gesammelt werden,
- wobei die Inspektion ferngesteuert und auf der Basis der Bilder (IMG1-IMG9), welche durch das UAV gesammelt werden, durchgeführt wird.

2. Verfahren nach Anspruch 1, wobei für die Inspektion mindestens Komponenten des Bilderfassungssystems (IAS) oder das gesamte Bilderfassungssystem (IAS) von dem unbemannten Luftfahrzeug (UAV) getragen werden.

3. Verfahren nach Anspruch 1 oder Anspruch 2, wobei ein optisches Kamerasystem oder ein Ultraschallsystem oder ein Hochfrequenzsystem oder ein Infrarotkamerasystem oder ein Wärmekamerasystem oder ein anderes System als ein Bilderfassungssystem (IAS) verwendet wird, um Bilder zu erzeugen und zu sammeln.

4. Verfahren nach einem der Ansprüche 1 bis 3, wobei die Bilder (IMG1-IMG9) oder resultierende Bilddaten zu einer zentralen Datenbank (CDB), welche vorzugsweise von dem unbemannten Luftfahrzeug (UAV) entfernt angeordnet ist, übertragen und in dieser gespeichert werden.

5. Verfahren nach Anspruch 4, wobei die Übertragung der Bilder oder der Bilddaten drahtlos erfolgt.

6. Verfahren nach einem der Ansprüche 1 bis 5,
- wobei die Bilder (IMG1-IMG9) oder resultierende Bilddaten unter Verwendung einer automatisierten Selbstdokumentation gespeichert werden oder
- wobei Teile der Bilddaten automatisch und entsprechend einem Satz von vorgegebenen Regeln für die Verfolgung von Oberflächenproblemen über die Zeit in einer zentralen Datenbank gesichert werden.

7. Verfahren nach einem der Ansprüche 1 bis 6, wobei das unbemannte Luftfahrzeug (UAV) autonom abhebt, zu der Oberfläche der Komponente navigiert und landet, wobei es ferngesteuert wird.

8. Verfahren nach Anspruch 7, wobei GPS-Daten für die Fernsteuerung verwendet werden.

9. Verfahren nach einem der Ansprüche 1 bis 8, wobei ein Computer an Bord des unbemannten Luftfahrzeugs (UAV) verwendet wird, um Beschädigungen an der Komponente automatisch über die gesammelten Bilder oder über die resultierenden Bilddaten zu erkennen.

10. Verfahren nach Anspruch 9, wobei erkannte Beschädigungen innerhalb eines Bildstroms oder innerhalb eines Videos, welches von dem unbemannten Luftfahrzeug (UAV) übertragen wird, hervorgehoben werden.

11. Verfahren nach einem der Ansprüche 1 bis 10, wobei das unbemannte Luftfahrzeug (UAV) verwendet wird, um Wärmemuster von Rissen in Rotorblättern der Windturbine durch eine Infrarot- oder Wärmekamera zu erkennen.

12. Verfahren nach einem der Ansprüche 1 bis 11, wobei die Oberfläche der Komponente inspiziert wird.

## Revendications

1. Procédé permettant d'inspecter un composant (BL) d'une éolienne (WT),
dans lequel un véhicule aérien sans équipage (UAV) est guidé vers le composant à inspecter,
dans lequel une certaine distance prédéfinie entre le véhicule aérien sans équipage (UAV) et le composant (BL) est choisie de telle manière que les images à haute résolution (IMG1 à IMG9) du composant sont rassemblées par le véhicule aérien sans équipage (UAV),
dans lequel les images (IMG1 à IMG9) sont rassemblées par un système d'acquisition d'images (IAS),
dans lequel l'inspection est réalisée par commande à distance et basée sur les images (IMG1 à IMG9) qui sont rassemblées par le UAV.

2. Procédé selon la revendication 1, dans lequel au moins des composants du système d'acquisition d'images (IAS) ou dans lequel la totalité du système d'acquisition d'images (IAS) est supportée par le véhicule aérien sans équipage (UAV) pour l'inspection.

3. Procédé selon la revendication 1 ou 2, dans lequel un système de caméras optiques ou un système à ultrasons ou un système haute fréquence ou un système de caméras à infrarouge ou un système de caméras thermiques ou un autre système est utilisé en tant que système d'acquisition d'images (IAS) pour générer et rassembler des images.

4. Procédé selon l'une des revendications 1 à 3, dans lequel les images (IMG1 à IMG9) ou les données d'images en résultant sont transférées et stockées dans une banque de données centrale (CDB), qui est préférentiellement disposée à distance du véhicule aérien sans équipage (UAV).

5. Procédé selon la revendication 4, dans lequel le transfert des images ou des données d'images est réalisé sans fil.

6. Procédé selon l'une des revendications 1 à 5,
dans lequel les images (IMG1 à IMG9) ou les données d'images en résultant sont stockées à l'aide d'une auto-documentation automatisée, ou
dans lequel des parties des données d'images sont sauvegardées automatiquement dans une banque de données centrale et en fonction d'un ensemble de règles prédéfinies pour le repérage de problèmes de surface dans la durée.

7. Procédé selon l'une des revendications 1 à 6, dans lequel le véhicule aérien sans équipage (UAV) s'envole, navigue vers la surface du composant et atterrit de manière autonome en étant commandé à distance.

8. Procédé selon la revendication 7, dans lequel des données GPS sont utilisées pour la commande à distance.

9. Procédé selon l'une des revendications 1 à 8, dans lequel, à part le véhicule aérien sans équipage (UAV), un ordinateur est utilisé pour détecter automatiquement des dommages sur le composant par l'intermédiaire des images rassemblées ou des données d'images en résultant.

10. Procédé selon la revendication 9, dans lequel des dommages détectés sont mis en évidence dans un flux d'images ou d'une vidéo qui est transféré(e) depuis le véhicule aérien sans équipage (UAV).

11. Procédé selon l'une des revendications 1 à 10, dans lequel le véhicule aérien sans équipage (UAV) est utilisé pour détecter des traces de fissures thermiques dans les pales de l'éolienne à l'aide d'une caméra infrarouge ou thermique.

12. Procédé selon l'une des revendications 1 à 11, dans lequel la surface du composant est inspectée.
